# EUROPÄISCHE PATENTSCHRIFT

(11) **EP 2 238 422 B1**
(45) Veröffentlichungstag und Bekanntmachung des Hinweises auf die Patenterteilung: **09.05.2012**
(21) Anmeldenummer: 09709061.7
(22) Anmeldetag: 06.02.2009
(51) Int. Cl.: G01M 3/20

(54) **SCHNÜFFELLECKSUCHER NACH DEM REFERENZMESSPRINZIP**
SNIFFING LEAK DETECTOR ACCORDING TO THE REFERENCE MEASUREMENT PRINCIPLE
DÉTECTEUR RENIFLEUR DE FUITES FONCTIONNANT SELON LE PRINCIPE DE MESURE DE RÉFÉRENCE

(30) Priorität: 08.02.2008 DE 102008008262
(43) Veröffentlichungstag der Anmeldung: 13.10.2010
(73) Patentinhaber: Inficon GmbH, 50968 Köln (DE)
(72) Erfinder: GROSSE BLEY, Werner, 53125 Bonn (DE); GERDAU, Ludolf, 50189 Elsdorf (DE); KÜSTER, Gerhard, 51109 Köln (DE); DÖBLER, Ulrich, 42929 Wermelskirchen (DE)
(74) Vertreter: von Kreisler Selting Werner
(86) Internationale Anmeldenummer: PCT/EP2009/051394
(87) Internationale Veröffentlichungsnummer: WO 2009/098302

(56) Entgegenhaltungen:
- WO-A-02/48686
- BÖHM, THOMAS: "A new type of refrigerant leak detector for leak tests in the refrigerating and air conditioning industry" NDT.NET, [Online] Bd. 8, Nr. 01, Januar 2003 (2003-01), XP002524826 Gefunden im Internet: URL:http://www.ndt.net/article/v08n01/boeh m/boehm.htm> [gefunden am 2009-04-22]

## Beschreibung

Die Erfindung betrifft einen Schnüffellecksucher nach dem Referenzmessprinzip, mit einem eine Vakuumpumpvorrichtung enthaltenden Grundgerät, einem mit dem Grundgerät über einen Schlauch verbundenen Handstück mit Schnüffelspitze, einer Messgas-Ansaugöffnung zum Ansaugen von Messgas, einer Referenzgas-Ansaugöffnung zum Ansaugen von Referenzgas und mit einem Gasanalysator zur Feststellung der Konzentrationen von Messgas und Referenzgas.

In WO 00/55603 ist ein Schnüffellecksucher nach dem Referenzmessprinzip beschrieben, der außer einer Messgas-Ansaugöffnung eine Referenzgas-Ansaugöffnung aufweist. Die Schnüffellecksuche wird häufig bei Prüflingen eingesetzt, die Kältemittel oder Kohlenwasserstoffe enthalten. Hierbei dienen die im Prüfling vorhandenen Medien als Testgas. Ist ein Leck vorhanden, gelangen geringe Mengen des jeweiligen Testgases zum Schnüffellecksucher. Dieser enthält einen Gasanalysator, der das Testgas erkennen kann. Bei der Schnüffellecksuche besteht das Problem, dass nicht nur das aus einem vorhandenen Leck austretende Testgas angesaugt wird, sondern auch Gas aus der Umgebung der Schnüffelspitze. Enthalten diese aus der Umgebung stammenden Gase geringe Konzentrationen des Testgases, das beispielsweise aus früher festgestellten Lecks oder aus der Füllstation einer Produktionslinie stammen kann, so werden diese ebenfalls vom Gasdetektor registriert. Um eine Unterscheidung zwischen Messgas und Umgebungsgas vorzunehmen, wird vorgeschlagen, im Gasanalysator eine Mess-Küvette und eine Referenz-Küvette vorzusehen, wodurch ein Messgassignal und ein Referenzgassignal erhalten werden. Beide werden in dem Lock-in-Verstärker so verarbeitet, dass das jeweilige Nutzsignal einer Modulation und anschließend einer phasenempfindlichen Gleichrichtung unterzogen wird. Auf diese Weise erhält man ein Nutzsignal, das die Differenz des Messsignals gegenüber dem Referenzsignal repräsentiert.

In WO 02/48686 A2 ist ein Schnüffellecksucher beschrieben, der ebenfalls eine Messgas-Ansaugöffnung und eine Referenzgas-Ansaugöffnung aufweist. Beide Ansaugöffnungen werden durch ein Schaltventil wechselseitig mit dem Einlass einer Küvette verbunden, welche an eine Vakuumpumpvorrichtung angeschlossen ist.

In Kühlschränken und Klimaanlagen wird zunehmend als Kältemittel CO₂ eingesetzt. Bei der Dichtheitsprüfung derartiger Geräte ist als Testgas CO₂ in der Umgebungsluft nachzuweisen. CO₂ ist in hoher Konzentration in der Ausatmungsluft der Bedienungsperson enthalten. Bei den üblichen Schnüffellecksuchern nach dem Referenzmessprinzip ist die Messgas-Ansaugöffnung am Ende der Schnüffelspitze angeordnet, während die Referenzgas-Ansaugöffnung seitlich und zurückliegend angeordnet ist. Ein solcher Schnüffellecksucher ist beispielsweise in Thomas Böhm: "A New Type of Refrigerant Leak Detector for Leak Tests in the Refrigerating and Air Conditioning Industry", NDT.net, Vol. 8, No. 01, Januar 2003*, XP-002524826* beschrieben. Dabei kann es vorkommen, dass ein Strom von Atemluft der Bedienungsperson die

Referenzgas-Ansaugöffnung trifft. In einem solchen Fall stellt das Gerät ein "negatives Leck" fest, weil die Konzentration von CO₂ in der Umgebungsluft der Messstelle höher ist als an der Messstelle selbst.

Der Erfindung liegt die Aufgabe zugrunde, einen Schnüffellecksucher nach dem Referenzmessprinzip zu schaffen, der unabhängig von etwaigen Strömungen in der Umgebungsluft zuverlässige Ergebnisse liefert und die Leckerkennung und Leckbewertung verbessert.

Der Schnüffellecksucher nach der vorliegenden Erfindung ist durch den Patentanspruch 1 definiert. Er ist dadurch gekennzeichnet, dass die Messgas-Ansaugöffnung und die Referenzgas-Ansaugöffnung an der Schnüffelspitze im wesentlichen parallel zueinander angeordnet sind.

Dadurch, dass die beiden Ansaugöffnungen im wesentlichen parallel sind, wird erreicht, dass sie Luft generell aus derselben Richtung ansaugen. Folglich wird das Messergebnis durch eine zufällige bzw. vorübergehende Querströmung der Luft nicht wesentlich verfälscht. Die Messgas-Ansaugöffnung wird von dem Bediener direkt an der auf Leckage zu prüfenden Stelle platziert, während die Referenzgas-Ansaugöffnung sich in seitlichem Abstand davon befindet, jedoch auf dieselbe Hauptrichtung ausgerichtet ist.

Dass die beiden Ansaugöffnungen im wesentlichen parallel zueinander angeordnet sind, bedeutet, dass sie eine geringe Winkelabweichung haben können. Diese beträgt maximal 15 Winkelgrade und insbesondere maximal 10 Winkelgrade. Der Vorteil der Erfindung zeigt sich bei einer dynamisch bewegten Atmosphäre, in der Querströmungen vorhanden sind. Solche Querströmungen können durch Ein- oder Ausatmung der Bedienungsperson auftreten. Hier wird durch die Anordnung der Ansaugöffnungen an der Schnüffelspitze eine Richtungsselektivität der Messempfindlichkeit erreicht, indem beide Ansaugöffnungen in dieselbe Richtung wirken.

Die Ansaugöffnungen können jeweils als Einzelöffnung ausgebildet sein oder als Mehrfach-Öffnung, beispielsweise als einzelne Bohrungen oder als Porenstruktur eines porösen Körpers. Es ist auch möglich, eine Membran zu verwenden, die für das Messgas durchlässig ist.

Vorzugsweise ist die Referenzgas-Ansaugöffnung gegenüber der Messgas-Ansaugöffnung zurückversetzt angeordnet. Dadurch wird erreicht, dass die Messgas-Ansaugöffnung direkt am Messort platziert werden kann, während die Referenzansaugöffnung einen größeren Abstand von der Messstelle hat und somit mehr Umgebungsluft einsaugen kann.

Die Schnüffelspitze sollte so ausgebildet sein, dass ein hochsymmetrischer Gastransport zum Nachweissystem erfolgt. Dazu sollten Länge und Volumen der beiden Gaskanäle, die von der Schnüffelspitze zum Gasanalysator führen, annähernd gleich sein. Vorzugsweise sind die Gaseintritte an der Schnüffelspitze koaxial zueinander bzw. rotationssymmetrisch. Die Form der Schnüffelspitze muss so sein, dass die Messgas-Ansaugöffnung trotz ihrer Nähe zur Referenzgas-Ansaugöffnung eine gewisse Trennung der Gasströme bewirkt.

Beim industriellen Gebrauch von Schnüffellecksuchern sind die Anforderungen an die Robustheit der Geräte sehr hoch. Dies liegt einerseits an der rauen Arbeitsumgebung und andererseits an der intensiven Dauerbenutzung der Geräte. Für die Gestaltung der Schnüffelspitze gibt es verschiedene Möglichkeiten der Ausführung:
1. Zentrales Rohr, das leicht vorsteht gegenüber einem offenen Ringspalt um das Rohr herum,
2. zentrales, vorstehendes Rohr umgeben von einer Reihe von Mikrokanälen, die in eine Referenzgasleitung münden, wobei die Kanäle,
   a. diskret gebohrt oder geätzt sind
   b. als poröser Filterkörper ausgebildet sind,
3. zentrales, vorstehendes Rohr umgeben von einer ringförmigen Membrane, die in eine Referenzgasleitung mündet,
4. Halbkugel- oder Halbellipsoidform mit Messgasöffnung zentral am höchsten Punkt und Ringspalt etwas "tiefer". Hierbei kann der Ringspalt wiederum ausgebildet sein als Öffnung, einzelne Löcher oder Membrane.

Der erfindungsgemäße Schnüffellecksucher nach dem Referenzmessprinzip arbeitet mit Gasmodulation. Das Messgas und das Referenzgas werden abwechselnd der Messung im Nachweissystem zugeführt, indem abwechselnd durch die Messgas-Ansaugöffnung und die Referenzgas-Ansaugöffnung angesaugt wird. Dadurch entsteht ein annähernd sinusförmiges Signal, dessen Amplitude die Differenz von Mess- und Referenzgaskonzentration repräsentiert. Das Umschalten zwischen Messgas und Referenzgas erfolgt durch ein Schaltventil, das von einer Lock-in-Einheit gesteuert ist. Die Differenzamplitude wird phasenempfindlich zur Ventilschaltfrequenz integriert. Dadurch werden Störsignale mit falscher Frequenz und/oder Phasenlage herausgefiltert. Das Nachweissystem muss eine genügend kurze Zeitkonstante besitzen, damit keine Signalintensität durch ungenügende Modulationsamplitude verloren geht. Mindestens sollte die Zeitkonstante des Nachweissystems gleich dem Kehrwert der Modulationsfrequenz sein. Andererseits muss die Modulationsfrequenz so hoch sein, dass eine dynamische Lecklokalisierung ermöglicht wird. Dies bedeutet, dass der Bediener die Schnüffelspitze mit hinreichend hoher Geschwindigkeit bewegen kann ohne ein Leck zu verpassen. Eine typische Modulationsfrequenz liegt in der Größenordnung von 3Hz. Das Material der Schnüffelspitze kann je nach Verwendung extrem hart sein oder abriebfest und elastisch.

Das Schaltventil für die Gasströme kann in oder an der Schnüffelspitze angeordnet sein oder auch am Ende der beiden Gastransportleitungen. Das Schaltventil sollte ein möglichst kleines Totvolumen besitzen und eine ausreichende Lastwechselfestigkeit, um im Dauerbetrieb bei der jeweiligen Modulationsfrequenz über einen langen Zeitraum standzuhalten.

Im Folgenden werden unter Bezugnahme auf die Zeichnungen Ausführungsbeispiele der Erfindung näher erläutert.

Es zeigen:
- Fig. 1: eine erste Ausführungsform des Schnüffellecksuchers, bei dem der Gasanalysator in das Handstück integriert ist,
- Fig. 2: eine Ausführungsform, bei der der Gasanalysator ein Massenspektrometer ist,
- Fig. 3: eine schematische Darstellung einer Schnüffelspitze mit verteilt um die Messgas-Ansaugöffnung angeordneten Kanalöffnungen,
- Fig. 4: eine Ausführungsform der Schnüffelspitze mit koaxialen Ansaugöffnungen und
- Fig. 5: eine weitere Ausführungsform, die sich besonders für robuste Einsätze eignet.

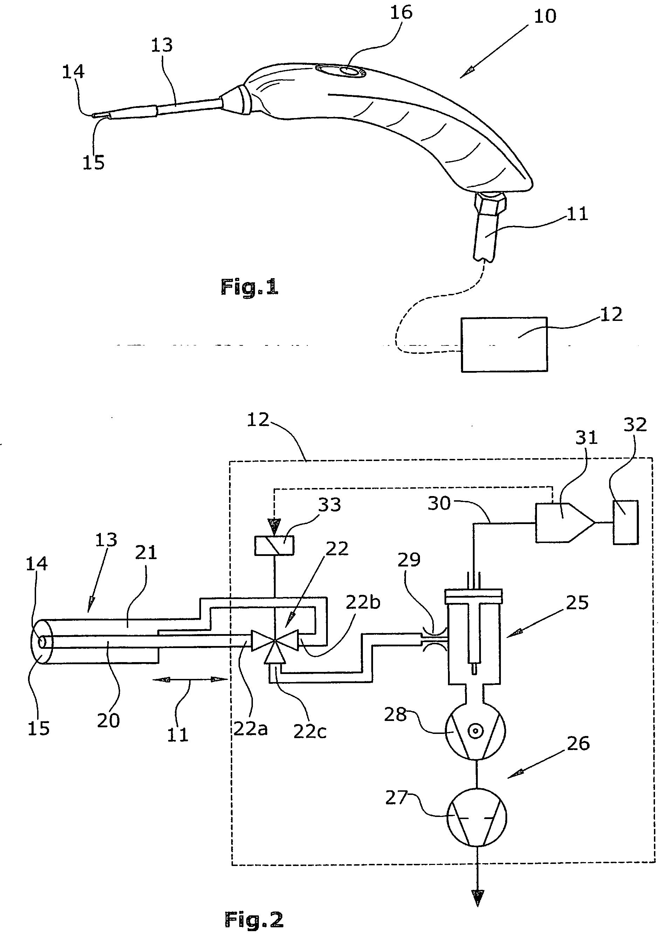

Der in Figur 1 dargestellte Schnüffellecksucher weist ein als Handgriff ausgebildetes Handstück 10 auf, das über einen Schlauch 11 mit einem Grundgerät 12 verbunden ist. Vom vorderen Ende des länglichen Handstücks 10 steht eine Schnüffelspitze 13 ab. Die Schnüffelspitze besteht aus einem langgestreckten Rohr, das zwei getrennte Kanäle enthält. Der eine Kanal endet an der vorderen Messgas-Ansaugöffnung 14. Die Ebene dieser Ansaugöffnung ist rechtwinklig zur Längsachse der Schnüffelspitze 13. Der andere Kanal endet an der Referenzgas-Ansaugöffnung 15, die etwas zurückliegend angeordnet ist und deren Fläche parallel zu derjenigen der Ansaugöffnung 14 verläuft.

Das Grundgerät 12 enthält unter anderem eine Vakuumpumpvorrichtung. Durch den Schlauch 11 wird das Vakuum zum Handstück 10 übertragen. Das Handstück 10 enthält einen (nicht dargestellten) Gasanalysator. Dieser besteht hier aus einem Infrarot-Gasanalysator, der imstande ist, selektiv das Gas CO₂ zu detektieren. Ein solcher Gasanalysator ist von einfacher und kompakter Bauweise, so dass er in einem Handgriff untergebracht werden kann. Die Stromversorgung geschieht über den Schlauch 11 durch das Grundgerät 12. Das Handstück 10 enthält auch die Bedienungsknöpfe, beispielsweise einen Knopf 16, mit dem der Bediener die Durchführung der Messung auslöst. Dadurch, dass die Referenzgas-Ansaugöffnung 15 im wesentlichen gleichgerichtet zu der Messgas-Ansaugöffnung angeordnet ist, wird erreicht, dass Gas von beiden Ansaugöffnungen aus derselben Richtung angesaugt wird.

Figur 2 zeigt eine andere Ausführungsform des Schnüffellecksuchers, bei dem als Nachweissystem ein Massenspektrometer benutzt wird. Ein Massenspektrometer bedeutet einen höheren Geräteaufwand, bietet jedoch die Vorteile höchster Selektivität, höchster Empfindlichkeit und großer Flexibilität bezüglich der Art der zu analysierenden Gase.

Gemäß Figur 2 enthält die Schnüffelspitze 13 eine Messgasleitung 20, die mit der Messgas-Ansaugöffnung 14 in Verbindung steht und eine hierzu koaxial verlaufende Referenzgasleitung 21, die mit der Referenzgas-Ansaugöffnung 15 in Verbindung steht. Beide Leitungen verlaufen durch den Schlauch 11 hindurch zu dem Grundgerät 12. Im Grundgerät ist ein Schaltventil 22 enthalten, das hier als 3/2-Wegeventil ausgebildet ist. Dies bedeutet, dass das Ventil drei Anschlüsse und zwei alternative Schaltwege hat. Ein Einlass 22a ist mit der Leitung 20 verbunden und ein anderen Einlass 22b ist mit der Leitung 21 verbunden. Der Auslass 22c des Schaltventils ist mit einem Gasanalysator 25 verbunden, bei dem es sich hier um ein Massenspektrometer handelt. Das Massenspektrometer benötigt ein Hochvakuum. Zu diesem Zweck ist eine Vakuumpumpvorrichtung 26 aus einer Vorvakuumpumpe 27 und einer Hochvakuumpumpe 28 in Form einer Turbomolekularpumpe vorgesehen. Am Eingang des Gasanalysators 25 befindet sich eine Drossel 29.

Das Messsignal des Gasanalysators 25 wird über eine Leitung 30 einer Lock-in-Einheit 31 zugeführt. Diese liefert ein Ausgangssignal an ein Display 32 oder eine andere Anzeigevorrichtung. Die Lock-in-Einheit 31 steuert außerdem den Elektromagneten 33 des Schaltventils 22. Die Lock-in-Einheit empfängt von einem Taktgeber ein Taktsignal und steuert in entsprechendem Rhythmus das Schaltventil 22 um, so dass abwechselnd der Einlass 22a und der Einlass 22b mit dem Auslass 22c verbunden wird.

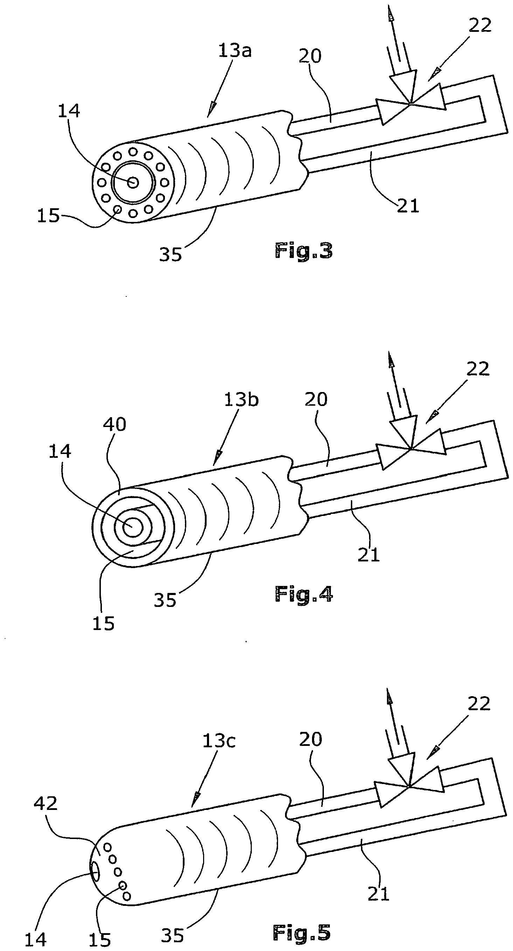

In den Figuren 3, 4 und 5 sind verschiedene Ausführungsformen der Schnüffelspitze dargestellt. Figur 3 zeigt eine Ausführungsform der Schnüffelspitze 13a, mit einem Rohr 35, das an seinem vorderen Ende die Messgas-Ansaugöffnung 14 aufweist. In der Rohrwand verlaufen Mikrokanäle, die in ihrer Gesamtheit die Referenzgas-Ansaugöffnung 15 bilden. Die Mikrokanäle umgeben die Messgas-Ansaugöffnung 14 in gleichmäßigen Winkelabständen. Sie sind mit der Leitung 21 verbunden, während die Messgas-Ansaugöffnung 14 mit der Leitung 20 verbunden ist. Beide Leitungen führen zu dem Schaltventil 22, das in gleicher Weise ausgebildet und gesteuert ist, wie dasjenige von Figur 2.

Figur 4 zeigt eine Schnüffelspitze 13b mit einem äußeren Rohr 35 und einem darin koaxial angeordneten inneren Rohr 40. Das innere Rohr 40 bildet die Messgas-Ansaugöffnung 14 und der Ringraum zwischen den beiden Rohren bildet die Referenzgas-Ansaugöffnung 15. Vorzugsweise steht das innere Rohr 40 gegenüber dem äußeren Rohr 35 nach vorne vor.

Bei dem Ausführungsbeispiel von Figur 5 besteht die Schnüffelspitze 13c, die die beiden Leitungen 20 und 21 enthält, aus einem abriebfesten elastischen Material. Sie weist am vorderen Ende eine abgerundete Kuppe 42 auf, die in ihrem Scheitelpunkt die Messgas-Ansaugöffnung 14 aufweist. Weitere Öffnung, die an der Kuppe angeordnet sind, bilden in ihrer Gesamtheit die Referenzgas-Ansaugöffnung 15.

## Patentansprüche

1. Schnüffellecksucher nach dem Referenzmessprinzip, mit einem eine Vakuumpumpvorrichtung (26) enthaltenden Grundgerät (12), einem mit dem Grundgerät über einen Schlauch (11) verbundenen Handstück (10) mit Schnüffelspitze (13), einer Messgas-Ansaugöffnung (14) zum Ansaugen von Messgas, einer Referenzgas-Ansaugöffnung (15) zum Ansaugen von Referenzgas und mit einem Gasanalysator (25) zur Feststellung der Konzentrationen von Messgas und Referenzgas,
**dadurch gekennzeichnet,**
**dass** die Messgas-Ansaugöffnung (14) und die Referenzgas-Ansaugöffnung (15) an der Schnüffelspitze (13) mit einer Winkelabweichung von maximal 15 Winkelgraden und insbesondere maximal 10 Winkelgraden im wesentlichen parallel zueinander angeordnet sind, und
**dass** die Referenzgas-Ansaugöffnung (15)
gegenüber der Messgas-Ansaugöffnung (14) zurückversetzt angeordnet ist,
um die Messgas-Ansaugöffnung (14) herum angeordnet ist und/oder aus mehreren Kanalöffnungen besteht, die einen die Messgas-Ansaugöffnung (14) umgebenden Ring bilden.

2. Schnüffellecksucher nach Anspruch 1, **dadurch gekennzeichnet, dass** die Schnüffelspitze (13) aus einem abriebfesten elastischen Material besteht.

3. Schnüffellecksucher nach Anspruch 1 oder 2, **dadurch gekennzeichnet, dass** die Schnüffelspitze (13c) eine abgerundete Kuppe (42) aufweist, an der die Ansaugöffnungen (14, 15) angeordnet sind.

4. Schnüffellecksucher nach einem der Ansprüche 1 - 3, **dadurch gekennzeichnet, dass** ein Schaltventil (22) vorgesehen ist, das abwechselnd die Messgas-Ansaugöffnung (14) und die Referenzgas-Ansaugöffnung (15) mit dem Gasanalysator (25) verbindet.

5. Schnüffellecksucher nach Anspruch 4, **dadurch gekennzeichnet, dass** das Schaltventil (22) von einer Lock-in-Einheit (31) gesteuert ist, welche die Signale des Gasanalysators (25) phasensynchron mit der Umschaltung des Schaltventils (22) verarbeitet.

## Claims

1. A sniffing leak detector according to the reference measurement principle, comprising a basic unit (12) including a vacuum pump device (26), further comprising a handpiece (10) with a sniffing tip (13), said handpiece being connected to the basic unit via a hose (11), a measurement-gas suction opening (14) for sucking in measurement gas, a reference-gas suction opening (15) for sucking in reference gas, and a gas analyzer (25) for determining the concentrations of the measurement gas and the reference gas,
**characterized in**
**that** the measurement-gas suction opening (14) and the reference-gas suction opening (15) on the sniffing tip (13) are arranged substantially parallel to each other with an angular offset of at most 15 degrees, in particular at most 10 degrees.
**that** the reference-gas suction opening (15)
is arranged at a recessed position relative to the measurement-gas suction opening (14),
is arranged around the measurement-gas suction opening (14) and/or
comprises a plurality of channel openings forming a ring surrounding the measurement-gas suction opening (14).

2. The sniffing leak detector according to claim 1, **characterized in that** the sniffing tip (13) is made of an abrasion-resistant elastic material.

3. The sniffing leak detector according to claim 1 or 2, **characterized in that** the sniffing tip (13c) comprises a rounded dome (42) with said suction openings (14,15) arranged therein.

4. The sniffing leak detector according to any one of claims 1 - 3, **characterized in that** a switching valve (22) is provided for alternate connection of the measurement-gas suction opening (14) and the reference-gas suction opening (15) to the gas analyzer (25).

5. The sniffing leak detector according to claim 4, **characterized in that** the switching valve (22) is controlled by a lock-in unit (31) processing the signals of the gas analyzer (25) in phase-synchronism with the switching of the switching valve (22).

## Revendications

1. Détecteur de fuite renifleur opérant d'après le principe de mesure de référence, comprenant un appareil de base (12) qui renferme un dispositif de pompe à vide (26), une pièce à main (10) reliée à l'appareil de base par un tuyau (11) et qui présente une pointe renifleuse (13), une ouverture d'aspiration de gaz à mesurer (14) servant à aspirer un gaz à mesurer et une ouverture d'aspiration de gaz de référence (15) servant à aspirer un gaz de référence, et un analyseur de gaz (25) qui sert à déterminer les concentrations du gaz à mesurer et du gaz de référence,
**caractérisé**
**en ce que** l'ouverture d'aspiration de gaz à mesurer (14) et l'ouverture d'aspiration de gaz de référence (15) sont disposées sur la pointe renifleuse (13), sensiblement parallèlement entre elles, avec un écart angulaire de 15 degrés d'angle au maximum et en particulier de 10 degrés d'angle au maximum, et
**en ce que** l'ouverture d'aspiration de gaz de référence (15)
est disposée en retrait par rapport à l'ouverture d'aspiration de gaz à mesurer (14),
est disposée autour de l'ouverture d'aspiration de gaz à mesurer (14) et/ou
est constituée par plusieurs ouvertures de canaux qui forment un anneau entourant l'ouverture d'aspiration de gaz à mesurer (14).

2. Détecteur de fuite renifleur selon la revendication 1, **caractérisé en ce que** la pointe renifleuse (13) est faite d'une matière élastique résistante à l'abrasion.

3. Détecteur de fuite renifleur selon la revendication 1 ou 2, **caractérisé en ce que** la pointe renifleuse (13c) présente un sommet arrondi (42) sur lequel les ouvertures d'aspiration (14, 15) sont disposées.

4. Détecteur de fuite renifleur selon l'une des revendications 1 à 3, **caractérisé en ce qu'**il est prévu un relais pneumatique (22) qui relie alternativement l'ouverture d'aspiration de gaz à mesurer (14) et l'ouverture d'aspiration de gaz de référence (15) à l'analyseur de gaz (25).

5. Détecteur de fuite renifleur selon la revendication 4, **caractérisé en ce que** le relais pneumatique (22) est commandé par une unité de détection synchrone (31) qui traite les signaux de l'analyseur de gaz (25) de façon synchronisée en phase avec l'inversion du relais pneumatique (22).
